# EUROPEAN PATENT SPECIFICATION

(11) **EP 3 016 048 B1**
(45) Date of publication and mention of the grant of the patent: **29.08.2018**
(21) Application number: 15192377.8
(22) Date of filing: 30.10.2015
(51) Int. Cl.: G06Q 10/10, G08B 21/18, H04W 4/02

(54) **METHOD AND DEVICE FOR DISPLAYING A REMINDER BASED ON GEOGRAPHIC CRITERIA**
VERFAHREN UND VORRICHTUNG ZUR ANZEIGE EINER ERINNERUNGSMELDUNG IN ABHÄNGIGKEIT VON GEOGRAFISCHEN KRITERIEN
PROCÉDÉ ET DISPOSITIF POUR L'AFFICHAGE D'UN RAPPEL EN FONCTION DE CRITÈRES GÉOGRAPHIQUES

(30) Priority: 31.10.2014 CN 201410602097
(43) Date of publication of application: 04.05.2016
(73) Proprietor: Xiaomi Inc., Beijing 100085 (CN)
(72) Inventor: GAO, Yi, BEIJING 100085 (CN); WANG, Hongqiang, BEIJING 100085 (CN); LONG, Hai, BEIJING 100085 (CN)
(74) Representative: Delumeau, François Guy

(56) References cited:
- US-A1- 2001 005 171
- US-A1- 2003 100 323
- US-A1- 2006 224 319
- US-A1- 2007 129 888
- US-A1- 2008 102 786
- US-A1- 2008 171 559
- US-A1- 2009 174 680
- US-A1- 2011 286 310
- US-A1- 2012 289 251
- US-A1- 2013 031 169
- US-A1- 2014 173 602
- US-B1- 8 195 194

## Description

### TECHNICAL FIELD

The present disclosure relates to the field of computer technology, and more particularly, to a method and a device for displaying item content.

### BACKGROUND

With the popularization of terminal applications, the user usually carries a terminal; thereby the user may conveniently remind himself about items by using the terminal.

When using the terminal to remind himself about items, the user may record a reminding item in an item record of the terminal and set a reminding time for the reminding item. When the reminding time arrives, the terminal reminds the user of the reminding item by generating a ringtone or vibration.

In the process of achieving the present disclosure, it was found that the related art at least has the following defects: reminding the item only according to the reminding time has a certain limitation. For example, a set reminding item is to buy newspaper at 8:00 AM; however, when reminding the item at 8:00 AM, the user may be very far from a position to buy the newspaper; therefore, such reminding has a certain limitation.

US 2007/129888 describes a system in which a reminder is associated with a locational area and a user of a mobile device may receive an alert and display of item content of the reminder when the mobile device crosses the perimeter of the locational area to enter that area and/or crosses the perimeter of the locational area to exit from the area. A larger perimeter may be set for triggering the "exit" reminder compared with the perimeter set for triggering the "entry" reminder.

### SUMMARY

In order to solve the problem of having a certain limitation due to performing item reminding only according to the time in the related art, the present disclosure provides a method and a device for displaying item content. The technical solutions are as follows.

According to a first aspect of embodiments of the present disclosure, there is provided a method for displaying item content, including:
when displaying a lock screen interface of a terminal, acquiring a current geographical position of the terminal;
detecting whether the current geographical position is within a display range of a reminding item; and
if the current geographical position is within the display range of the reminding item, displaying item content of the reminding item on the lock screen interface;
wherein the method further includes:
   when setting the reminding item, receiving a distance inputted when setting a reminding range corresponding to the display range to acquire the reminding range, wherein a center of the reminding range is the same as a center of the display range, the reminding range is larger than the display range, and a distance between an intersection point of any ray emitted from a central point of the display range on the perimeter of the reminding range and an intersection point of the ray on the perimeter of the display range is equal to the received distance; and
   adding the reminding range into the reminding item; and
   if the current geographical position is not within the display range of the reminding item, detecting whether the current geographical position is within the reminding range of the reminding item; and
   if detecting that the current geographical position is within the reminding range of the reminding item, reminding the reminding item through a predetermined reminding manner comprising:
      acquiring an ambient light intensity of the terminal;
      when the ambient light intensity is larger than a predetermined light threshold, turning on a screen of the terminal to pop up a prompt box for prompting the reminding content in the reminding item on the screen; and
      when the ambient light intensity is smaller than the predetermined light threshold, reminding the reminding item through a vibration manner or a ring manner.

Optionally, the method further includes:
when setting the reminding item, acquiring a geographical position of the terminal;
acquiring a given setting range including the geographical position; and determining the setting range as the display range of the reminding item.

Optionally, the method further includes:
after reminding the reminding item through the predetermined reminding manner, modifying a reminding attribute of the reminding item in the reminding range to be no longer reminding.

Optionally, a time period for reminding is also set in the reminding item, and the displaying of the item content of the reminding item includes:
if the current moment is within the time period for reminding, displaying the item content of the reminding item.

According to a second aspect of embodiments of the present disclosure, there is provided a device for displaying item content, including:
a first acquisition module configured to, when displaying a lock screen interface of a terminal, acquire a current geographical position of the terminal;
a first detection module configured to detect whether the current geographical position acquired by the first acquisition module is within a display range of a reminding item; and
a display module configured to, if the first detection module detects that the current geographical position is within the display range of the reminding item, display the item content of the reminding item on the lock screen interface;
a receiving module configured to, when setting the reminding item, receive a distance inputted when setting a reminding range corresponding to the display range to acquire the reminding range, wherein a center of the reminding range and a center of the display range are the same, the reminding range is larger than the display range, and a distance between an intersection point of any ray emitted from a central point of the display range on the perimeter of the reminding range and an intersection point of the ray on the perimeter of the display range is equal to the received distance;
an addition module configured to add the reminding range into the reminding item;
a second detection module configured to, if the first detection module detects that the current geographical position acquired by the first acquisition module is not within the display range of the reminding item, detect whether the current geographical position is within the reminding range of the reminding item; and
a reminding module configured to, if the second detection module detects that the current geographical position is within the reminding range of the reminding item, remind the user of the reminding item through a predetermined reminding manner.

The reminding module includes:
an acquisition submodule configured to acquire an ambient light intensity of the terminal;
a popup submodule configured to, when the ambient light intensity acquired by the acquisition submodule is larger than a predetermined light threshold, turn on a screen of the terminal to pop up a prompt box for prompting the reminding content in the reminding item on the screen; and
a reminding submodule configured to, when the ambient light intensity acquired by the acquisition submodule is smaller than the predetermined light threshold, remind the user of the reminding item through a vibration manner or a ring manner.

Optionally, the device further includes:
a second acquisition module configured to, when setting the reminding item, acquire a geographical position of the terminal;
a third acquisition module configured to acquire a given setting range including the geographical position acquired by the second acquisition module; and
a determination module configured to determine the setting range acquired by the third acquisition module as the display range of the reminding item.

Optionally, the device further includes:
a modification module configured to, after the reminding module reminds the user of the reminding item through the predetermined reminding manner, modify a reminding attribute of the reminding item in the reminding range to be no longer reminding.

Optionally, a time period for reminding is also set in the reminding item, and the display module is also configured to:
if the current moment is within the time period for reminding, display the item content of the reminding item.

According to a third aspect of embodiments of the present disclosure, there is provided a device for displaying item content, including:
a processor; and
a memory for storing instructions executable by the processor;
wherein the processor is configured to:
   when displaying a lock screen interface of a terminal, acquire a current geographical position of the terminal;
   detect whether the current geographical position is within a display range of a reminding item; and
   if the current geographical position is within the display range of the reminding item, display item content of the reminding item on the lock screen interface;
and, when setting the reminding item, to receive a distance inputted when setting a reminding range corresponding to the display range to acquire the reminding range, wherein a center of the reminding range is the same as a center of the display range, the reminding range is larger than the display range, and a distance between an intersection point of any ray emitted from a central point of the display range on the perimeter of the reminding range and an intersection point of the ray on the perimeter of the display range is equal to the received distance;
to add the reminding range into the reminding item; and
if the current geographical position is not within the display range of the reminding item, detecting whether the current geographical position is within the reminding range of the reminding item; and
if detecting that the current geographical position is within the reminding range of the reminding item, reminding the reminding item through a predetermined reminding manner comprising:
   acquiring an ambient light intensity of the terminal;
   when the ambient light intensity is larger than a predetermined light threshold, turning on a screen of the terminal to pop up a prompt box for prompting the reminding content in the reminding item on the screen; and
   when the ambient light intensity is smaller than the predetermined light threshold, reminding the user about the reminding item through a vibration manner or a ring manner.

The present invention also provides a computer program, which when executing on a processor of a terminal, performs the above method.

The technical solutions provided by the embodiments of the present disclosure may include the following advantageous effects:
when displaying the lock screen interface of the terminal, if the current geographical position of the terminal is within a display range of a certain reminding item, then the item content of the reminding item is displayed on the lock screen interface. Since the item content of the reminding item may be displayed when displaying the lock screen interface of the terminal if the terminal is within the display range set in the reminding item, the problem of having a certain limitation due to performing item reminding only according to the time in the related art is solved; and the effects of implementing effective reminding in the set display range and improving the reminding frequency are achieved.

It is to be understood that both the foregoing general description and the following detailed description are illustrative and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for displaying item content, related to the invention.
Fig. 2A is a flow chart showing a method for displaying item content, according to an example embodiment of the invention.
Fig. 2B is a block diagram of a reminding item setting interface in lock screen information, according to an example embodiment.
Fig. 2C is a block diagram illustrating the setting of a reminding range, according to an example embodiment.
Fig. 2D is a block diagram illustrating the displaying of a reminding item content on a lock screen interface, according to an example embodiment.
Fig. 2E is a block diagram illustrating the displaying of a reminding item content on a lock screen interface, according to another example embodiment.
Fig. 3 is a block diagram showing a device for displaying item content, related to the invention.
Fig. 4 is a block diagram showing a device for displaying item content, according to an example embodiment of the invention.
Fig. 5 is a block diagram showing a device for displaying item content, according to an example embodiment.

### DETAILED DESCRIPTION

Reference will now be made in detail to illustrative embodiments, examples of which are represented in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of devices and methods consistent with some aspects related to the invention as recited in the appended claims.

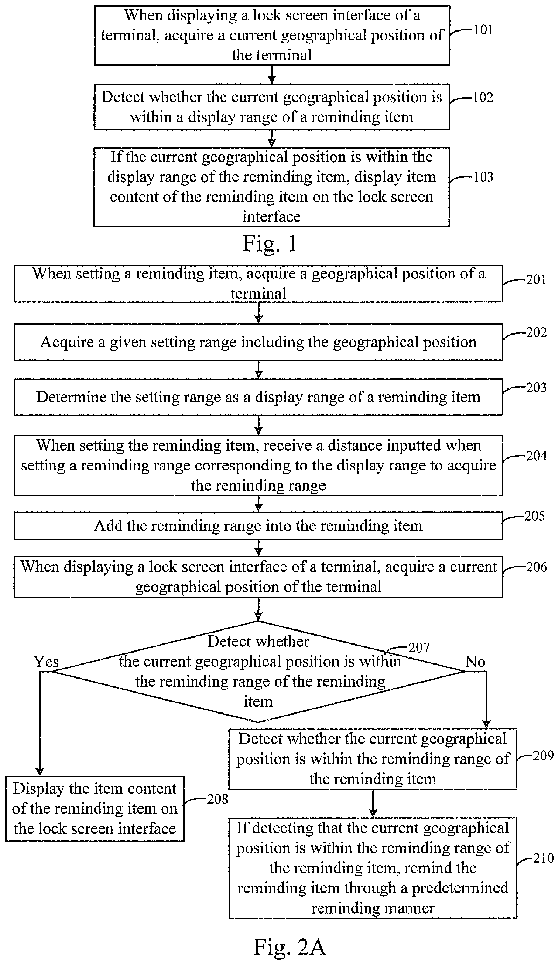

Fig. 1 is a flow chart showing a method for displaying item content, related to the invention. As shown in Fig. 1, the method for displaying item content is applied in a terminal, and the terminal described herein may be a smartphone, a tablet computer, a smart TV, an e-book reader, a multimedia player, a laptop portable computer, a desktop computer and the like. The method for displaying item content includes the following steps.

In step 101, when displaying a lock screen interface of a terminal, a current geographical position of the terminal is acquired.

The lock screen interface is an interface displayed when the screen is turned on, but in a lock screen state. On the lock screen interface, the terminal cannot enter the main interface of the terminal unless the screen is unlocked.

In step 102, whether the current geographical position is within a display range of a reminding item is detected.

The display range of the reminding item defines a position for displaying the display content of the reminding item; that is, the terminal cannot display the item content of the reminding item on the lock screen interface unless the terminal is within the given display range of the reminding item.

In step 103, if the current geographical position is within the display range of the reminding item, the item content of the reminding item is displayed on the lock screen interface.

In conclusion, according to the method for displaying item content provided by Fig.1, when displaying the lock screen interface of the terminal, if the current geographical position of the terminal is within a display range of a certain reminding item, then the item content of the reminding item is displayed on the lock screen interface; since the item content of the reminding item may be displayed when displaying the lock screen interface of the terminal if the terminal is within the display range set in the reminding item, the problem of having a certain limitation due to performing the item reminding only according to the time in the related art is solved; and the effects of implementing effective reminding in the set display range and improving the reminding frequency are achieved.

Fig. 2A is a flow chart showing a method for displaying item content, according to an example embodiment of the invention. As shown in Fig. 2A, the method for displaying item content is applied in a terminal, and the terminal described herein may be a smartphone, a tablet computer, a smart TV, an e-book reader, a multimedia player, a laptop portable computer, a desktop computer and the like. The method for displaying item content includes the following steps.

In step 201, when setting a reminding item, a geographical position of a terminal is acquired.

Usually, a lock screen function is set in the terminal. After a screen is turned on, a lock screen interface will be displayed on the screen. The lock screen interface is an interface displayed when the screen is turned on, but in a lock screen state. On the lock screen interface, the terminal cannot enter the main interface of the terminal unless the screen is unlocked.

During actual use, the user may frequently view the lock screen interface, for example, when the user wants to view the time through the terminal after the terminal goes on standby, a power button of the terminal may be pressed. At this time, the screen of the terminal will be turned on and the lock screen interface will be displayed. Therefore, the lock screen interface is frequently viewed by the user. If the lock screen interface is used for prompting items, the reminding efficiency can be greatly improved, and important items are avoided to be missed by the user due to less reminding.

Therefore, the embodiment may remind the user of items by using the lock screen. interface. When setting the reminding item, a menu item for setting and reminding lock screen information may be set in the lock screen function interface, and the user may customize the lock screen information and the reminding item in a setting unit corresponding to the menu item.

In order to ensure that, during reminding, the set reminding item may effectively ensure that the user implements the reminding content, when setting up the reminding item a geographical position range may be set for the reminding content. The geographical position range is usually proximate to the position where the user implements the reminding content, for example, the set reminding item may be: reminding the user to carry a key (the set reminding content) at the door (i.e., one set range) of the house of the user; because the user usually carries the key in the house or near the door of the house, the position for the user to carry the key is very close to the position of the door of the house of the user, which is convenient for reminding the user to finish the corresponding item in a closer distance and improves the usage experience of the user.

And therefore, when setting the range for the reminding item, the geographical position of the terminal may be acquired firstly. Optionally, the geographical position of the terminal may be acquired through a GPS (full name in English: Global Positioning System) disposed in the terminal.

During practical application, the user may click the menu item of "customize lock screen information" in the lock screen settings of the terminal, and then the terminal enters the corresponding setting interface of "lock screen information setting and reminding unit"; in this setting interface, an input box for setting a reminding item is displayed, and the user is prompted to input customized reminding content. Meanwhile, the GPS of the terminal is turned on to load a map interface acquired by the GPS on the displayed interface.

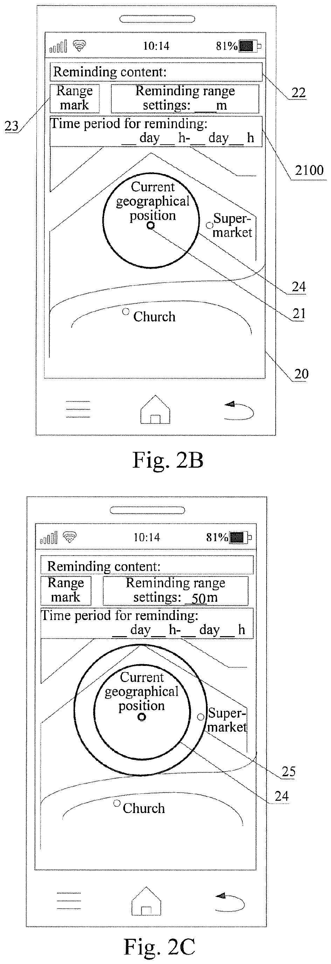

Referring to Fig. 2B, which is a block diagram of a reminding item setting interface in lock screen information, according to an example embodiment, the setting interface 20 displays a map including the geographical position 21 of the terminal. In the map, the geographical position 21 of the terminal is marked in a noticeable manner. Accordingly, when setting the reminding item in the setting interface 20, the user may input the customized reminding content in an input box 22 for reminding content.

In step 202, a given setting range including the geographical position is acquired.

Usually, the reminding range set for the reminding item may include the geographical position of the terminal.

Referring again to Fig. 2B, after clicking a range mark setting control 23, the user may define a closed area 24 around the geographical position 21, the closed area 24 being the display range 24 of the reminding item. The closed area 24 usually includes the geographical position 21; that is, the display range 24 includes the geographical position 21 of the terminal.

It should be additionally noted that a shape formed by an edge of the display range may be a circle, an oval, a rectangle, a triangle or a polygon. The shape formed by the edge of the display range is not specially restricted by the embodiments.

In step 203, the setting range is determined as the display range of the reminding item.

The setting range defined while setting the reminding item is determined as the display range of the reminding item.

In step 204, when setting the reminding item, a distance inputted when setting a reminding range corresponding to the display range is received to acquire the reminding range.

During practical application, when the terminal is within the display range, the user may never view the lock screen interface of the terminal. At this time, the reminding item corresponding to the display range can never be displayed, and the user can never know the reminding item. In order to avoid the user missing the reminding item, a reminding range may also be set for the reminding item. In this way, when the terminal is outside the display range but within the reminding range, the reminding item is directly reminded.

Optionally, when setting the reminding item, the reminding item may be set according to the currently set display range, for example, a range formed N meters away from the original display range is used as the reminding range. That is, the center of the reminding range and the center of the display range may be the same; the reminding range may be larger than the display range, and the distance between an intersection point of any ray emitted from the central point of the display range on the perimeter of the reminding range and an intersection point of the ray on the perimeter of the display range is equal to the received distance. That is, a shape formed by the perimeter of the reminding range and a shape formed by the perimeter of the display range are concentric shapes.

For example, when the shape formed by the perimeter of the display range is a circle, the shape formed by the perimeter of the reminding range is also a circle; the circle formed by the perimeter of the display range and the circle formed by the perimeter of the reminding range are concentric circles; and the circle formed by the perimeter of the display range is smaller than the circle formed by the perimeter of the reminding range.

For another example, when the shape formed by the perimeter of the display range is a rectangle, the shape formed by the perimeter of the reminding range is also a rectangle; the rectangle formed by the perimeter of the display range and the rectangle formed by the perimeter of the reminding range are concentric rectangles; and the rectangle formed by the perimeter of the display range is smaller than the rectangle formed by the perimeter of the reminding range.

Referring to Fig. 2C, which is a block diagram illustrating the setting of a reminding range according to an example embodiment, when the display range 24 is set, a distance inputted when setting a reminding range 25 corresponding to the display range 24 may be set in the position for setting the reminding range, such as 50 meters set in Fig. 2C, so as to acquire the reminding range 25 corresponding to the display range 24. The display range 24 and the reminding range 25 in Fig. 2C are concentric circles; the reminding range 25 is larger than the display range 24; and the radius of the reminding range 25 is greater than the radius of the display range by 50 meters.

In step 205, the reminding range is added into the item record of the reminding item.

The set reminding range is added into the item record of the reminding item; thus, the reminding item has an item record that includes the reminding content, the display range and the reminding range.

In step 206, when displaying the lock screen interface of the terminal, the current geographical position of the terminal is acquired.

When displaying the lock screen interface of the terminal, for example, when the power button of the terminal is pressed to turn on the screen of the terminal if the screen of the terminal is in a closed state, and the lock screen interface is displayed on the turned on screen, in order to determine whether to display the corresponding reminding item on the lock screen interface, the current geographical position of the terminal is acquired firstly.

Optionally, the geographical position of the terminal may be acquired through the GPS disposed in the terminal.

In step 207, whether the current geographical position is within the display range of the reminding item is detected.

During practical application, a plurality of reminding items may be set according to the actual situation, each reminding item being provided with a corresponding display range. When in use, after acquiring the current geographical position of the terminal, whether the current geographical position is within a display range of a certain or some reminding items is detected.

In step 208, if the current geographical position is within the display range of the reminding item, the item content of the reminding item is displayed on the lock screen interface.

If the current geographical position is within the display range of a certain reminding item, then the item content of the reminding item is displayed on the lock screen interface to be displayed; in this way, the user may know the corresponding reminding content while viewing the lock screen interface, thus implementing relevant items.

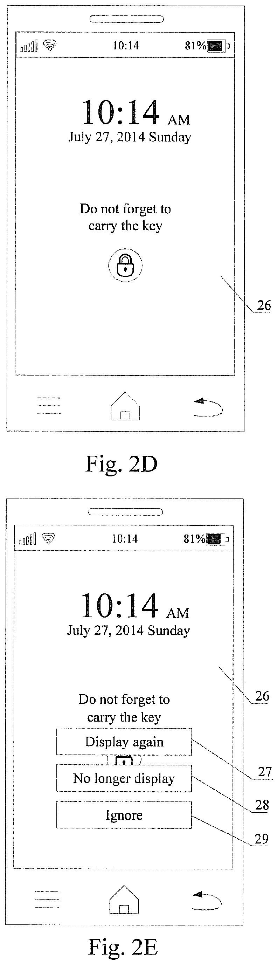

For example, referring to Fig. 2D, which is a block diagram illustrating the displaying of a reminding content on a lock screen interface according to an example embodiment, the reminding content of "do not forget to carry the key" is displayed on the lock screen interface 26.

Optionally, when the lock screen interface displays the item content of the reminding item, the user may also be provided with a first option and a second option. If the first option is selected, then the item content of the reminding item will be displayed again when displaying the lock screen interface of the terminal again; and if the second option is selected, then the item content of the reminding item will not be displayed any longer when displaying the lock screen interface of the terminal again.

For example, referring to Fig. 2E, which is a block diagram illustrating the displaying of a reminding content on a lock screen interface according to an example embodiment, a reminding content of "do not forget to carry the key" is displayed on the lock screen interface 26. Meanwhile, a first option 27 and a second option 28 for the user to select are displayed. If the first option 27 is selected, then the reminding content of "do not forget to carry the key" of the reminding item will be displayed again when displaying the lock screen interface 26 again; and if the second option 28 is selected, then the reminding content of "do not forget to carry the key" of the reminding item will not be displayed any longer when displaying the lock screen interface 26 again. Moreover, a third option 29 may also be set in the reminding content. If the third option is selected, then the reminding setting when displaying the lock screen interface 26 again will be ignored, and the reminding content of "do not forget to carry the key" of the reminding item will be displayed again by default when displaying the lock screen interface 26 again. Optionally, the first option 27, the second option 28 and the third option 29 may be controls that are overlapped displayed on the lock screen interface 26 and are able to be directly selected by the user in the lock screen state.

It should be additionally noted that when setting the reminding item in the setting menu item of the lock screen interface, the user may select a reminding manner on the lock screen interface, i.e., may either select a reminding manner of displaying the reminding content of the reminding item only or select a reminding manner of displaying the reminding content of the reminding item as well as the first option, the second option and the third option at the same time, which will not be specially restricted in the embodiment.

In step 209, if the current geographical position is not within the display range of the reminding item, whether the current geographical position is within the reminding range of the reminding item is detected.

If the current geographical position is not within the display range of the reminding item, in order to avoid that the user does not view the reminding content of the reminding item, whether the current geographical position is within the reminding range of the reminding item may be continuously detected.

In step 210, if detecting that the current geographical position is within the reminding range of the reminding item, then the user is reminded of the reminding item through a predetermined reminding manner.

If detecting that the current geographical position is within the reminding range of the reminding item, then the user may be reminded of the reminding item through the predetermined reminding manner.

Optionally, when detecting that the current geographical position is within the reminding range of the reminding item and the reminding item is never displayed in the display range corresponding to the reminding range, the user may be reminded of the reminding item through the predetermined reminding manner. That is, if the user carries the terminal within a display range of a certain reminding item and does not view the lock screen interface, the user does not view the reminding content about the reminding item in the lock screen interface; while when the user leaves the display range and reaches in the reminding range (a region in the reminding range not overlapped with the display range) of the reminding item, the user may be reminded of the reminding item through the predetermined reminding manner to ensure that the user may know the reminding item.

The reminding of the user about the reminding item by the terminal through the predetermined reminding manner includes:
first, an ambient light intensity of the terminal is acquired;
second, when the ambient light intensity is larger than a predetermined light threshold, the screen of the terminal is turned on to pop up a prompt box for prompting the reminding content in the reminding item on the screen; and
third, when the ambient light intensity is smaller than the predetermined light threshold, the reminding item is reminded through a vibration manner or a ring manner.

During practical application, when the terminal is put into a pocket or a bag by the user, usually the user cannot directly view or know the reminding content even if the screen illuminates to remind the user of the reminding content of the reminding item; therefore, the ambient light intensity of the terminal may be used to distinguish the environment of the terminal, and different reminding manners may be selected according to the environment of the terminal for reminding the user about the reminding content of the reminding item. For example, when the ambient light intensity is larger than a predetermined light threshold, it indicates that the terminal is in a place where the user can view directly rather than in the bag or pocket; at this time, the screen of the terminal may be turned on to pop up the prompt box for prompting the reminding content in the reminding item on the screen. Clearly, the reminding content in the reminding item may be directly displayed on the screen as well. When the ambient light intensity is smaller than the predetermined light threshold, it means that the terminal is possibly in the bag or the pocket; at this time, the reminding item may be reminded using a vibration manner or ring manner, thus ensuring that the user can effectively and instantly view the reminding item.

In conclusion, according to the method for displaying item content provided by the embodiments of the present disclosure, when displaying the lock screen interface of the terminal, if the current geographical position of the terminal is within a display range of a certain reminding item, then the item content of the reminding item is displayed on the lock screen interface; since the item content of the reminding item may be displayed when displaying the lock screen interface of the terminal if the terminal is within the display range set in the reminding item, the problem of having a certain limitation due to performing item reminding only according to the time in related art is solved; and the effects of implementing effective reminding in the set display range and improving the reminding frequency are achieved.

According to the method for displaying item content provided by the embodiments of the present disclosure, both the display range and the reminding range are set for the reminding item; and when the terminal is outside the display range but within the reminding range, prompting is performed, thus the situation that the user misses the reminding item due to not viewing the lock screen interface within the display range can be effectively avoided.

According to the method for displaying item content provided by the embodiments of the present disclosure, when the ambient light intensity of the terminal is larger than the predetermined light threshold, the screen of the terminal is turned on to pop up the prompt box for prompting the reminding content of the reminding item on the screen, and when the ambient light intensity of the terminal is smaller than the predetermined light threshold, the reminding item is reminded using the vibration manner or ring manner; therefore, the problem that the user cannot be effectively reminded of the displayed reminding item when the terminal is put in the pocket or bag by the user may be solved, and the effect that the user can be still effectively reminded of the relevant reminding item when the terminal is put in the pocket or bag is achieved.

In another possible implementation manner, in step 210, after reminding the reminding item through the predetermined reminding manner, the reminding attribute of the reminding item in the reminding range may also be modified to be no longer reminding. That is, if the user is reminded within the reminding range, then the reminding item will not be reminded again within the reminding range. In one implementation scene, the display range of the reminding item set by the user is the house of the user, and the reminding range is the community where the house of the user locates. In this case, when the user does not view the reminding item in the house, and the user leaves the house and enters the reminding range (a region in the community excluding the house of the user), prompting is performed again. Usually in this case, the user has left the house already. If the reminding item is related to the position of the house, then the prompting may be performed for once only because the user may possibly not need to return to the house to perform the reminding item. At this time, in order to avoid the user being disturbed by frequent reminding, the reminding attribute of the reminding item in the reminding range may be modified to be no longer reminding. In this way, although the terminal is still within the reminding range, the terminal will not remind the user of the reminding item any longer. However, if the user is in the house, and the reminding item is related to the position of the house, then frequent reminding may be performed so as to avoid the situation that the user misses to perform the reminding item in the house.

According to the method for displaying item content provided by the embodiments of the present disclosure, after the reminding item is reminded through the predetermined reminding manner, the reminding attribute of the reminding item within the reminding range may also be modified to be no longer reminding, thus avoiding the user being disturbed due to frequent reminding of the terminal outside the display range but within the reminding range.

In another possible implementation manner, a time period for reminding may also be set in the reminding item, and the terminal displaying the item content of the reminding item may further include: if the current moment is within the time period for reminding, displaying the item content of the reminding item. For example, when the terminal displays the item content of the reminding item, the time period for reminding of the reminding item may be acquired firstly, and whether the current moment is within the time period for reminding is detected. If the current moment is within the time period for reminding, the item content of the reminding item is displayed.

When setting the reminding item, the setting interface may provide a setting interface for setting the time period for reminding. Still referring to Fig. 2B, the interface 2100 for setting the time period for reminding is displayed, and the user may set the time period for reminding corresponding to the reminding item on the interface 200.

According to the method for displaying item content provided by the embodiments of the present disclosure, the time period for reminding is set in the reminding item, and the item content of the reminding item is displayed on the lock screen interface only when both the time period for reminding and the display range comply with the settings of the reminding item, thus the present disclosure can prevent the user from being disturbed due to frequent reminding not in the time period for reminding, and achieve the effect of improving the reminding precision.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

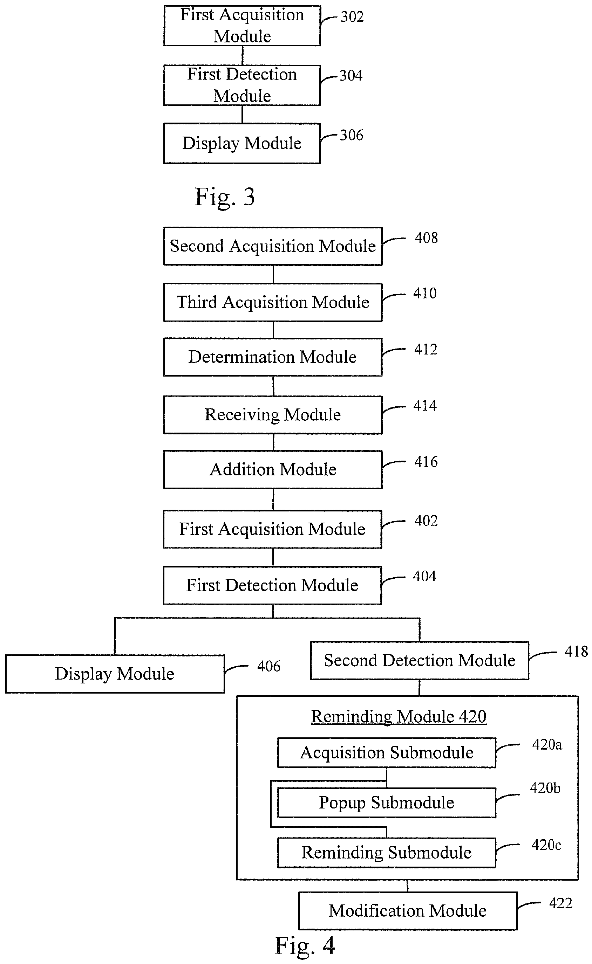

Fig. 3 is a block diagram showing a device for displaying item content, related to the invention. As shown in Fig. 3, the device for displaying item content is applied in a terminal, and the terminal described herein may be a smartphone, a tablet computer, a smart TV, an e-book reader, a multimedia player, a laptop portable computer, a desktop computer and the like. The device for displaying item content includes, but is not limited to: a first acquisition module 302, a first detection module 304 and a display module 306.

The first acquisition module 302 is configured to, when displaying a lock screen interface of a terminal, acquire a current geographical position of the terminal.

The first detection module 304 is configured to detect whether the current geographical position acquired by the first acquisition module 302 is within a display range of a reminding item.

The display module 306 is configured to, if the first detection module 304 detects that the current geographical position is within the display range of the reminding item, display item content of the reminding item on the lock screen interface.

In conclusion, according to the device for displaying item content of Fig.3, when displaying the lock screen interface of the terminal, if the current geographical position of the terminal is within a display range of a certain reminding item, then the item content of the reminding item is displayed on the lock screen interface; since the item content of the reminding item of the reminding item may be displayed when displaying the lock screen interface of the terminal if the terminal is within the display range set in the reminding item, the problem of having a certain limitation due to performing item reminding only according to the time in the related art is solved; and the effects of implementing effective reminding in the set display range and improving the reminding frequency are achieved.

Fig. 4 is a block diagram showing a device for displaying item content, according to an example embodiment. As shown in Fig. 4, the device for displaying item content is applied in a terminal, and the terminal described herein may be a smartphone, a tablet computer, a smart TV, an e-book reader, a multimedia player, a laptop portable computer, a desktop computer and the like. The device for displaying item content includes, but is not limited to: a first acquisition module 402, a first detection module 404 and a display module 406.

The first acquisition module 402 is configured to, when displaying a lock screen interface of a terminal, acquire a current geographical position of the terminal.

The first detection module 404 is configured to detect whether the current geographical position acquired by the first acquisition module 402 is within a display range of a reminding item.

The display module 406 is configured to, if the first detection module 404 detects that the current geographical position is within the display range of the reminding item, display item content of the reminding item on the lock screen interface.

In a possible implementation manner, the device for displaying item content may further include: a second acquisition module 408, a third acquisition module 410 and a determination module 412.

The second acquisition module 408 is configured to, when setting the reminding item, acquire a geographical position of the terminal.

The third acquisition module 410 is configured to acquire a given setting range including the geographical position acquired by the second acquisition module 408.

The determination module 412 is configured to determine the setting range acquired by the third acquisition module 410 as the display range of the reminding item.

In a possible implementation manner, the device for displaying item content may further include: a receiving module 414 and an addition module 416.

The receiving module 414 is configured to, when setting the reminding item, receive a distance inputted when setting a reminding range corresponding to the display range to acquire the reminding range, a center of the reminding range and a center of the display range being the same, the reminding range being larger than the display range, and a distance between an intersection point of any ray emitted from the central point of the display range on an edge shape of the reminding range and an intersection point of the ray on an edge shape of the display range being equal to the received distance.

The addition module 416 is configured to add the reminding range into the reminding item.

The device for displaying item content further includes: a second detection module 418 and a reminding module 420.

The second detection module 418 is configured to, if the first detection module 404 detects that the current geographical position acquired by the first acquisition module 402 is not within the display range of the reminding item, detect whether the current geographical position is within the reminding range of the reminding item.

The reminding module 420 is configured to, if the second detection module 418 detects that the current geographical position is within the reminding range of the reminding item, remind the user of the reminding item through a predetermined reminding manner.

The reminding module 420 includes: an acquisition submodule 420a, a popup submodule 420b and a reminding submodule 420c.

The acquisition submodule 420a is configured to acquire an ambient light intensity of the terminal.

The popup submodule 420b is configured to, when the ambient light intensity acquired by the acquisition submodule 420a is larger than a predetermined light threshold, turn on the screen of the terminal to pop up a prompt box for prompting the reminding content in the reminding item on the screen.

The reminding submodule 420c is configured to, when the ambient light intensity acquired by the acquisition submodule 420a is smaller than the predetermined light threshold, remind the user of the reminding item through a vibration manner or a ring manner.

In a possible implementation manner, the device for displaying item content may further include: a modification module 422.

The modification module 422 is configured to, after the reminding module 420 reminds the reminding item through the predetermined reminding manner, modify A reminding attribute of the reminding item in the reminding range to be no longer reminding.

In a possible implementation manner, a time period for reminding is also set in the reminding item, and the display module 406 is also configured to:
if the current moment is within the time period for reminding, display the item content of the reminding item.

In conclusion, according to the device for displaying item content provided by the embodiments of the present disclosure, when displaying the lock screen interface of the terminal, if the current geographical position of the terminal is within a display range of a certain reminding item, then the item content of the reminding item is displayed on the lock screen interface; since the item content of the reminding item may be displayed when displaying the lock screen interface of the terminal if the terminal is within the display range set in the reminding item, the problem of having a certain limitation due to performing item reminding only according to the time in the related art is solved; and the effects of implementing effective reminding in the set display range and improving the reminding frequency are achieved.

According to the device for displaying item content provided by the embodiments of the present disclosure, both the display range and the reminding range are set for the reminding item; and when the terminal is outside the display range but within the reminding range, prompting is performed, thus the present disclosure can effectively avoid the situation that the user misses the reminding item due to not viewing the lock screen interface within the display range.

According to the device for displaying item content provided by the embodiments of the present disclosure, when the ambient light intensity of the terminal is larger than the predetermined light threshold, the screen of the terminal is turned on to pop up the prompt box for prompting the reminding content of the reminding item on the screen, and when the ambient light intensity of the terminal is smaller than the predetermined light threshold, the reminding item is reminded using the vibration manner or ring manner; therefore, the problem that the user cannot be effectively reminded of the displayed reminding item when the terminal is put in the pocket or bag by the user may be solved, and the effect that the user can be still effectively reminded of the relevant reminding item when the terminal is put in the pocket or bag is achieved.

According to the device for displaying item content provided by the embodiments of the present disclosure, after the reminding item is reminded through the predetermined reminding manner, the reminding attribute of the reminding item within the reminding range may also be modified to be no longer reminding, thus avoiding the user being disturbed due to frequent reminding of the terminal outside the display range but in the reminding range.

According to the device for displaying item content provided by the embodiments of the present disclosure, the time period for reminding is set in the reminding item, and the item content of the reminding item is displayed on the lock screen interface only when both the time period for reminding and the display range comply with the settings of the reminding item, thus the present disclosure can avoid the user being disturbed due to frequent reminding not in the time period for reminding, and achieving the effect of improving the reminding precision.

With respect to the devices in the above embodiments, the specific manners for performing operations for individual modules therein have been described in detail in the embodiments regarding the methods, which will not be elaborated herein.

An example embodiment of the present disclosure provides a device for displaying item content, which can implement the method for displaying item content provided by the present disclosure, wherein the device for displaying item content includes: a processor and a memory for storing instructions executable by the processor;
wherein the processor is configured to:
when displaying a lock screen interface of a terminal, acquire a current geographical position of the terminal;
detect whether the current geographical position is within a display range of a reminding item; and
if the current geographical position is within the display range of the reminding item, display item content of the reminding item on the lock screen interface;
and, when setting the reminding item, to receive a distance inputted when setting a reminding range corresponding to the display range to acquire the reminding range, wherein a center of the reminding range is the same as a center of the display range, the reminding range is larger than the display range, and a distance between an intersection point of any ray emitted from a central point of the display range on the perimeter of the reminding range and an intersection point of the ray on the perimeter of the display range is equal to the received distance;
to add the reminding range into the reminding item; and
if the current geographical position is not within the display range of the reminding item, detecting whether the current geographical position is within the reminding range of the reminding item; and
if detecting that the current geographical position is within the reminding range of the reminding item, reminding the reminding item through a predetermined reminding manner comprising:
   acquiring an ambient light intensity of the terminal;
   when the ambient light intensity is larger than a predetermined light threshold, turning on a screen of the terminal to pop up a prompt box for prompting the reminding content in the reminding item on the screen; and
   when the ambient light intensity is smaller than the predetermined light threshold, reminding the user about the reminding item through a vibration manner or a ring manner.

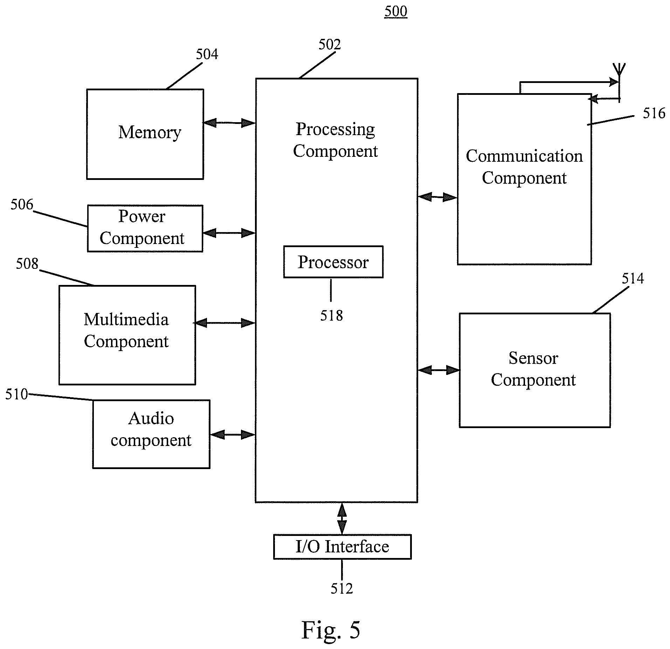

Fig. 5 is a block diagram showing a device for displaying item content, according to an example embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as Wi-Fi, 2G, or 3G, or a combination thereof. In one example embodiment, the communication component 516 receives a broadcast signal or broadcast associated information from an external broadcast management system via a broadcast channel. In one example embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for displaying item content.

In example embodiments, there is also provided a non-transitory computer-readable storage medium including instructions, such as included in the memory 504, executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as illustrative only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims

## Claims

1. A method for displaying item content, the method comprises:
when displaying a lock screen interface of a terminal, acquiring a current geographical position of the terminal;
detecting whether the current geographical position is within a display range of a reminding item; and
if the current geographical position is within the display range of the reminding item, displaying item content of the reminding item on the lock screen interface;
wherein the method further comprises:
when setting the reminding item, receiving a distance inputted when setting a reminding range corresponding to the display range to acquire the reminding range, wherein a center of the reminding range is the same as a center of the display range, the reminding range is larger than the display range, and a distance between an intersection point of any ray emitted from a central point of the display range on the perimeter of the reminding range and an intersection point of the ray on the perimeter of the display range is equal to the received distance; and
adding the reminding range into the reminding item; and
if the current geographical position is not within the display range of the reminding item, detecting whether the current geographical position is within the reminding range of the reminding item; and
if detecting that the current geographical position is within the reminding range of the reminding item, reminding the reminding item through a predetermined reminding manner comprising:
acquiring an ambient light intensity of the terminal;
when the ambient light intensity is larger than a predetermined light threshold, turning on a screen of the terminal to pop up a prompt box for prompting the reminding content in the reminding item on the screen; and
when the ambient light intensity is smaller than the predetermined light threshold, reminding the user about the reminding item through a vibration manner or a ring manner.

2. The method according to claim 1, **characterized in that**, the method further comprises:
when setting the reminding item, acquiring a geographical position of the terminal;
acquiring a given setting range comprising the geographical position; and
determining the setting range as the display range of the reminding item.

3. The method according to claim 1, **characterized in that**, the method further comprises:
after reminding the reminding item through the predetermined reminding manner, modifying a reminding attribute of the reminding item in the reminding range to be no longer reminding.

4. The method according to any one of claims 1 to 3, **characterized in that**, a time period for reminding is further set in the reminding item, and the displaying the item content of the reminding item comprises:
if the current moment is within the time period for reminding, displaying the item content of the reminding item.

5. A device for displaying item content, the device comprises:
a first acquisition module (302) configured to, when displaying a lock screen interface (26) of a terminal, acquire a current geographical position of the terminal;
a first detection module (304) configured to detect whether the current geographical position acquired by the first acquisition module (302) is within a display range of a reminding item;
a display module (306) configured to, if the first detection module (304) detects that the current geographical position is within the display range of the reminding item, display the item content of the reminding item on the lock screen interface (26);
a receiving module (414) configured to, when setting the reminding item, receive a distance inputted when setting a reminding range corresponding to the display range to acquire the reminding range, wherein a center of the reminding range is the same as a center of the display range, the reminding range is larger than the display range, and a distance between an intersection point of any ray emitted from a central point of the display range on the perimeter of the reminding range and an intersection point of the ray on the perimeter of the display range is equal to the received distance;
an addition module (416) configured to add the reminding range into the reminding item;
a second detection module (418) configured to, if the first detection module (404) detects that the current geographical position acquired by the first acquisition module (302) is not within the display range of the reminding item, detect whether the current geographical position is within the reminding range of the reminding item; and
a reminding module (420) configured to, if the second detection module (418) detects that the current geographical position is within the reminding range of the reminding item, remind the user of the reminding item through a predetermined reminding manner,
the reminding module (420) comprising:
an acquisition submodule (420a) configured to acquire an ambient light intensity of the terminal;
a popup submodule (420b) configured to, when the ambient light intensity acquired by the acquisition submodule (420a) is larger than a predetermined light threshold, turn on a screen of the terminal to pop up a prompt box for prompting the reminding content in the reminding item on the screen; and
a reminding submodule (420c) configured to, when the ambient light intensity acquired by the acquisition submodule is smaller than the predetermined light threshold, remind the user about the reminding item through a vibration manner or a ring manner.

6. The device according to claim 5, **characterized in that**, the device further comprises:
a second acquisition module (408) configured to, when setting the reminding item, acquire a geographical position of the terminal;
a third acquisition module (410) configured to acquire a given setting range comprising the geographical position acquired by the second acquisition module (408); and
a determination module (412) configured to determine the setting range acquired by the third acquisition module (410) as the display range of the reminding item.

7. The device according to claim 5, **characterized in that**, the device further comprises:
a modification module (422) configured to, after the reminding module (420) reminds the reminding item through the predetermined reminding manner, modify a reminding attribute of the reminding item in the reminding range to be no longer reminding.

8. The device according to any one of claims 5 to 7, **characterized in that**, a time period for reminding is further set in the reminding item, and the display module (306) is further configured to:
if the current moment is within the time period for reminding, display the item content of the reminding item.

9. A device (500) for displaying item content, the device comprises:
a processor (518); and
a memory (504) for storing instructions executable by the processor (518);
wherein the processor (518) is configured to:
when displaying a lock screen interface (26) of a terminal, acquire a current geographical position of the terminal;
detect whether the current geographical position is within a display range of a reminding item; and
if the current geographical position is within the display range of the reminding item, display the item content of the reminding item on the lock screen interface (26);
and, when setting the reminding item, to receive a distance inputted when setting a reminding range corresponding to the display range to acquire the reminding range, wherein a center of the reminding range is the same as a center of the display range, the reminding range is larger than the display range, and a distance between an intersection point of any ray emitted from a central point of the display range on the perimeter of the reminding range and an intersection point of the ray on the perimeter of the display range is equal to the received distance;
to add the reminding range into the reminding item; and
if the current geographical position is not within the display range of the reminding item, detecting whether the current geographical position is within the reminding range of the reminding item; and
if detecting that the current geographical position is within the reminding range of the reminding item, reminding the reminding item through a predetermined reminding manner comprising:
acquiring an ambient light intensity of the terminal;
when the ambient light intensity is larger than a predetermined light threshold, turning on a screen of the terminal to pop up a prompt box for prompting the reminding content in the reminding item on the screen; and
when the ambient light intensity is smaller than the predetermined light threshold, reminding the user about the reminding item through a vibration manner or a ring manner.

10. A computer program which, when executing on a processor of a terminal, performs a method according to any one of claims 1 to 4.

## Patentansprüche

1. Verfahren zur Anzeige von Eintragsinhalt, wobei das Verfahren umfasst:
wenn eine Sperrbildschirm-Schnittstelle eines Endgeräts angezeigt wird, Erlangen einer aktuellen geographischen Position des Endgeräts,
Erkennen, ob die aktuelle geographische Position innerhalb eines Anzeigebereichs eines Erinnerungseintrags liegt, und
falls die aktuelle geografische Position innerhalb des Anzeigebereichs des Erinnerungseintrags liegt, Anzeigen des Eintragsinhalts des Erinnerungseintrags auf der Sperrbildschirm-Schnittstelle,
wobei das Verfahren ferner umfasst:
wenn der Erinnerungseintrag festgelegt wird, Empfangen eines Abstands, der eingegeben wird, wenn ein Erinnerungsbereich festgelegt wird, der dem Anzeigebereich entspricht, um den Erinnerungsbereich zu erlangen, wobei eine Mitte des Erinnerungsbereichs gleich einer Mitte des Anzeigebereichs ist, wobei der Erinnerungsbereich größer als der Anzeigebereich ist, und ein Abstand zwischen einem Schnittpunkt eines Strahls, der von einem Mittelpunkt des Anzeigebereichs ausgeht, auf dem Umfang des Erinnerungsbereichs und einem Schnittpunkt des Strahls auf dem Umfang des Anzeigebereichs gleich dem empfangenen Abstand ist, und
Hinzufügen des Erinnerungsbereichs zu dem Erinnerungseintrag, und
falls die aktuelle geographische Position nicht innerhalb des Anzeigebereichs des Erinnerungseintrags liegt, Erkennen, ob die aktuelle geographische Position innerhalb des Erinnerungsbereichs des Erinnerungseintrags liegt, und
falls erkannt wird, dass die aktuelle geografische Position innerhalb des Erinnerungsbereichs des Erinnerungseintrags liegt, Erinnern an den Erinnerungseintrag in einer vorbestimmten Erinnerungsweise, umfassend:
Erlangen einer Umgebungslichtintensität des Endgeräts,
wenn die Umgebungslichtintensität größer als ein vorbestimmter Lichtschwellenwert ist, Einschalten eines Bildschirms des Endgeräts, um ein Aufklappfenster zum Anzeigen des Erinnerungsinhalts des Erinnerungseintrags auf dem Bildschirm einzublenden, und
wenn die Umgebungslichtintensität kleiner als der vorbestimmte Lichtschwellenwert ist, Erinnern des Benutzers an den Erinnerungseintrag in einer Vibrationsweise oder einer Klingelweise.

2. Verfahren nach Anspruch 1, **dadurch gekennzeichnet, dass** das Verfahren ferner umfasst:
wenn der Erinnerungseintrag festgelegt wird, Erlangen einer geografischen Position des Endgeräts,
Erlangen eines gegebenen Festlegungsbereichs, der die geographische Position umfasst, und
Bestimmen des Festlegungsbereichs als Anzeigebereich des Erinnerungseintrags.

3. Verfahren nach Anspruch 1, **dadurch gekennzeichnet, dass** das Verfahren ferner umfasst:
nach dem Erinnern an den Erinnerungseintrag durch die vorbestimmte Erinnerungsweise, Modifizieren eines Erinnerungsattributs des Erinnerungseintrags in dem Erinnerungsbereich, um nicht mehr erinnernd zu sein.

4. Verfahren nach einem der Ansprüche 1 bis 3, **dadurch gekennzeichnet, dass** in dem Erinnerungseintrag ferner eine Erinnerungszeitdauer festgelegt wird, und das Anzeigen des Eintragsinhalts des Erinnerungseintrags umfasst:
falls der aktuelle Zeitpunkt innerhalb der Erinnerungszeitdauer liegt, Anzeigen des Eintragsinhalts des Erinnerungseintrags.

5. Vorrichtung zur Anzeige von Eintragsinhalt, wobei die Vorrichtung umfasst:
ein erstes Erlangungsmodul (302), das konfiguriert ist, wenn eine Sperrbildschirm-Schnittstelle (26) eines Endgeräts angezeigt wird, eine aktuelle geographische Position des Endgeräts zu erlangen,
ein erstes Erkennungsmodul (304), das konfiguriert ist, zu erkennen, ob die durch das erste Erlangungsmodul (302) erlangte aktuelle geographische Position innerhalb eines Anzeigebereichs eines Erinnerungseintrags liegt,
ein Anzeigemodul (306), das konfiguriert ist, falls das erste Erkennungsmodul (304) erkennt, dass die aktuelle geographische Position innerhalb des Anzeigebereichs des Erinnerungseintrags liegt, den Eintragsinhalt des Erinnerungseintrags auf der Sperrbildschirm-Schnittstelle (26) anzuzeigen,
ein Empfangsmodul (414), das konfiguriert ist, wenn der Erinnerungseintrag festgelegt wird, einen Abstand zu empfangen, der eingegeben wird, wenn ein Erinnerungsbereich festgelegt wird, der dem Anzeigebereich entspricht, um den Erinnerungsbereich zu erlangen, wobei eine Mitte des Erinnerungsbereichs gleich einer Mitte des Anzeigebereichs ist, der Erinnerungsbereich größer als der Anzeigebereich ist und ein Abstand zwischen einem Schnittpunkt eines Strahls, der von einem Mittelpunkt des Anzeigebereichs ausgeht, auf dem Umfang des Erinnerungsbereichs und einem Schnittpunkt des Strahls auf dem Umfang des Anzeigebereichs gleich dem empfangenen Abstand ist;
ein Hinzufügungsmodul (416), das konfiguriert ist, den Erinnerungsbereich zu dem Erinnerungseintrag hinzuzufügen,
ein zweites Erkennungsmodul (418), das konfiguriert ist, falls das erste Erkennungsmodul (404) erkennt, dass die durch das erste Erlangungsmodul (302) erlangte aktuelle geografische Position nicht innerhalb des Anzeigebereichs des Erinnerungseintrags liegt, zu erkennen, ob die aktuelle geographische Position innerhalb des Erinnerungsbereichs des Erinnerungseintrags liegt, und
ein Erinnerungsmodul (420), das konfiguriert ist, falls das zweite Erkennungsmodul (418) erkennt, dass die aktuelle geografische Position innerhalb des Erinnerungsbereichs des Erinnerungseintrags liegt, den Benutzer auf eine vorbestimmte Erinnerungsweise an den Erinnerungseintrag zu erinnern,
wobei das Erinnerungsmodul (420) umfasst:
ein Erlangungsmodul (420a), das konfiguriert ist, eine Umgebungslichtintensität des Endgeräts zu erlangen,
ein Einblendungsuntermodul (420b), das konfiguriert ist, wenn die durch das Erlangungsuntermodul (420a) erlangte Umgebungslichtintensität größer als ein vorbestimmter Lichtschwellenwert ist, einen Bildschirm des Endgeräts einzuschalten, um ein Aufklappfenster zum Anzeigen des Erinnerungsinhalts des Erinnerungseintrags auf dem Bildschirm einzublenden, und
ein Erinnerungsuntermodul (420c), das konfiguriert ist, wenn die durch das Erlangungsuntermodul erlangte Umgebungslichtintensität kleiner als der vorbestimmte Lichtschwellwert ist, den Benutzer auf eine Vibrationsweise oder Klingelweise an den Erinnerungseintrag zu erinnern.

6. Vorrichtung nach Anspruch 5, **dadurch gekennzeichnet, dass** die Vorrichtung ferner umfasst:
ein zweites Erlangungsmodul (408), das konfiguriert ist, wenn der des Erinnerungseintrags festgelegt wird, eine geographische Position des Endgeräts zu erlangen,
ein drittes Erlangungsmodul (410), das konfiguriert ist, einen gegebenen Festlegungsbereich zu erlangen, der die durch das zweite Erlangungsmodul (408) erlangte geografische Position umfasst, und
ein Bestimmungsmodul (412), das konfiguriert ist, den durch das dritte Erlangungsmodul (410) erlangten Festlegungsbereich als den Anzeigebereich des Erinnerungseintrags zu bestimmen.

7. Vorrichtung nach Anspruch 5, **dadurch gekennzeichnet, dass** die Vorrichtung ferner umfasst:
ein Modifizierungsmodul (422), das konfiguriert ist, nachdem das Erinnerungsmodul (420) durch die vorbestimmte Erinnerungsweise an den Erinnerungseintrag erinnert, ein Erinnerungsattribut des Erinnerungseintrags in dem Erinnerungsbereich zu modifizieren, um nicht mehr zu erinnern.

8. Vorrichtung nach einem der Ansprüche 5 bis 7, **dadurch gekennzeichnet, dass** in dem Erinnerungseintrag ferner eine Erinnerungszeitdauer festgelegt ist, und das Anzeigemodul (306) ferner konfiguriert ist zum:
falls aktuelle Zeitpunkt innerhalb der Erinnerungszeitdauer liegt, Anzeigen des Eintragsinhalts des Erinnerungseintrags.

9. Vorrichtung (500) zur Anzeige von Eintragsinhalt, wobei die Vorrichtung umfasst:
einen Prozessor (518) und
einen Speicher (504) zum Speichern von Anweisungen, die durch den Prozessor (518) ausführbar sind,
wobei der Prozessor (518) konfiguriert ist zum:
wenn eine Sperrbildschirm-Schnittstelle (26) eines Endgeräts angezeigt wird, Erlangen einer aktuellen geografische Position des Endgeräts,
Erkennen, ob die aktuelle geografische Position innerhalb eines Anzeigebereichs eines Erinnerungseintrags liegt, und
falls die aktuelle geographische Position innerhalb des Anzeigebereichs des Erinnerungseintrags liegt, Anzeigen des Eintragsinhalts des Erinnerungseintrags auf der Sperrbildschirm-Schnittstelle (26),
und, wenn der Erinnerungseintrag festgelegt wird, Empfangen eines Abstands, der eingegeben wurde, wenn ein Erinnerungsbereich festgelegt wird, der dem Anzeigebereich entspricht, um den Erinnerungsbereich zu erlangen, wobei eine Mitte des Erinnerungsbereichs gleich einer Mitte des Anzeigebereichs ist, der Erinnerungsbereich größer als der Anzeigebereich ist, und ein Abstand zwischen einem Schnittpunkt eines Strahls, der von einem Mittelpunkt des Anzeigebereichs ausgeht, auf dem Umfang des Erinnerungsbereichs und einem Schnittpunkt des Strahls auf dem Umfang des Anzeigebereichs gleich dem empfangenen Abstand ist,
Hinzufügen des Erinnerungsbereichs zu dem Erinnerungseintrag, und
falls die aktuelle geographische Position nicht innerhalb des Anzeigebereichs des Erinnerungseintrags liegt, Erkennen, ob die aktuelle geographische Position innerhalb des Erinnerungsbereichs des Erinnerungseintrags liegt, und
falls erkannt wird, dass die aktuelle geografische Position innerhalb des Erinnerungsbereichs der Erinnerungseintrag liegt, Erinnern an den Erinnerungseintrag auf eine vorbestimmte Erinnerungsweise, umfassend:
Erlangen einer Umgebungslichtintensität des Endgeräts,
wenn die Umgebungslichtintensität größer als ein vorbestimmter Lichtschwellenwert ist, Einschalten eines Bildschirms des Endgeräts, um ein Aufklappfenster zum Anzeigen des Erinnerungsinhalts in dem Erinnerungseintrag auf dem Bildschirm einzublenden, und
wenn die Umgebungslichtintensität kleiner als der vorbestimmte Lichtschwellenwert ist, Erinnern des Benutzers an den Erinnerungseintrag auf eine Vibrationsweise oder Klingelweise.

10. Computerprogramm, das, wenn es auf einem Prozessor eines Endgeräts ausgeführt wird, ein Verfahren nach einem der Ansprüche 1 bis 4 durchführt.

## Revendications

1. Procédé d'affichage d'un contenu d'article, ce procédé comprenant :
lors de l'affichage d'une interface d'écran de verrouillage d'un terminal, acquisition d'une position géographique courante du terminal ;
la détection si la position géographique courante se trouve dans une plage d'affichage d'un article de rappel ; et
si la position géographique courante se trouve dans une plage d'affichage de l'article de rappel, affichage du contenu de l'article de rappel sur l'interface d'écran de verrouillage ;
le procédé comprenant en outre :
lors du réglage de l'article de rappel, la réception d'une distance entrée lors du réglage d'une plage de rappel correspondant à la plage d'affichage afin d'acquérir la plage de rappel, un centre de la plage de rappel étant le même qu'un centre de la plage d'affichage, la plage de rappel étant plus grande que la plage d'affichage et une distance entre un point d'intersection d'un rayon émis à partir d'un point central de la plage d'affichage sur le périmètre de la plage de rappel et un point d'intersection du rayon sur le périmètre de la plage d'affichage est égale à la distance reçue ; et
l'ajout de la plage de rappel dans l'article de rappel ; et
si la position géographique courante n'est pas dans la plage d'affichage de l'article de rappel, la détection si la position géographique courante est dans la plage de rappel de l'article de rappel ; et
si la détection que la position géographique courante est dans la plage de rappel de l'article de rappel, rappel de l'article de rappel avec une manière de rappel prédéterminée, comprenant :
l'acquisition d'une intensité lumineuse ambiante du terminal ;
lorsque l'intensité lumineuse ambiante est supérieure à un seuil de luminosité prédéterminé, activation d'un écran du terminal pour faire apparaître une fenêtre intruse afin de rappeler le contenu du rappel dans l'article de rappel sur l'écran ; et
lorsque l'intensité lumineuse ambiante est inférieure au seuil de luminosité prédéterminé, rappel à l'utilisateur de l'article de rappel avec une vibration ou une sonnerie.

2. Procédé selon la revendication 1, **caractérisé en ce que** le procédé comprend en outre :
lors du réglage de l'article de rappel, l'acquisition d'une position géographique du terminal ;
l'acquisition d'une plage de réglage donnée comprenant la position géographique ; et
la détermination de la plage de réglage comme la plage d'affichage de l'article de rappel.

3. Procédé selon la revendication 1, **caractérisé en ce que** le procédé comprend en outre :
après le rappel de l'article de rappel de la manière de rappel prédéterminée, la modification d'un attribut de rappel de l'article de rappel dans la plage de rappel afin qu'il ne soit plus rappelé.

4. Procédé selon l'une des revendications 1 à 3, **caractérisé en ce qu'**un période pour le rappel est en outre réglée dans l'article de rappel, et l'affichage du contenu de l'article de rappel comprend :
si le moment courant se trouve dans la période pour le rappel, l'affichage du contenu de l'article de rappel.

5. Dispositif d'affichage d'un contenu d'article, ce dispositif comprenant :
un premier module d'acquisition (302) conçu pour acquérir, lors de l'affichage d'une interface d'écran de verrouillage (26) d'un terminal, une position géographique courante du terminal ;
un premier module de détection (304) conçu pour détecter si la position géographique courante acquise par le premier module d'acquisition (302) se trouve dans une plage d'affichage d'un article de rappel ;
un module d'affichage (306) conçu pour afficher, si le premier module de détection (304) détecte que la position géographique courante se trouve dans la plage d'affichage de l'article de rappel, le contenu de l'article de rappel sur l'interface d'écran de verrouillage (26) ;
un module de réception (414) conçu pour recevoir, lors du réglage de l'article de rappel, une distance entrée lors du réglage d'une plage de rappel correspondante à la plage d'affichage afin d'acquérir la plage de rappel, un centre de la plage de rappel étant le même qu'un centre de la plage d'affichage, la plage de rappel étant plus grande que la plage d'affichage et une distance entre un point d'intersection d'un rayon émis à partir d'un point central de la plage d'affichage sur le périmètre de la plage de rappel et un point d'intersection du rayon sur le périmètre de la plage d'affichage est égale à la distance reçue ;
un module d'ajout (416) conçu pour ajouter la plage de rappel à l'article de rappel ;
un deuxième module de détection (418) conçu pour détecter, si le premier module de détection (404) détecte que la position géographique courante acquise par le premier module d'acquisition (302) ne se trouve pas dans la plage d'affichage de l'article de rappel, si la position géographique courante se trouve dans la plage de rappel de l'article de rappel ; et
un module de rappel (420) conçu pour rappeler à l'utilisateur, si le deuxième module de détection (418) détecte que la position géographique courante acquise se trouve dans la plage de rappel de l'article de rappel, l'article de rappel d'une manière de rappel prédéterminée,
le module de rappel (420) comprenant :
un sous-module d'acquisition (420a) conçu pour acquérir une intensité lumineuse ambiante du terminal :
un sous-module d'allumage (420b) conçu pour activer un écran du terminal lorsque l'intensité lumineuse ambiante acquise par le sous-module d'acquisition (420a) est supérieure à un seuil de luminosité prédéterminé, afin de faire apparaître une fenêtre intruse afin de rappeler le contenu du rappel de l'article de rappel sur l'écran ; et
un sous-module de rappel (420c) conçu pour rappeler à l'utilisateur, si l'intensité lumineuse ambiante acquise par le sous-module d'acquisition est inférieure au seuil de luminosité prédéterminé, l'article de rappel avec une vibration ou une sonnerie.

6. Dispositif selon la revendication 5, **caractérisé en ce que** le dispositif comprend en outre :
un deuxième module d'acquisition (408) conçu pour acquérir, lors du réglage de l'article de rappel, une position géographique du terminal ;
un troisième module d'acquisition (410) conçu pour acquérir une plage de réglage donnée comprenant la position géographique courante acquise par le deuxième module d'acquisition (408) ; et
un module de détermination (412) conçu pour déterminer la plage de réglage acquise par le troisième module d'acquisition (410) comme la plage d'affichage de l'article de rappel.

7. Dispositif selon la revendication 5, **caractérisé en ce que** le dispositif comprend en outre :
un module de modification (422) conçu pour modifier, après que le module de rappel (420) ait rappelé l'article de rappel de la manière de rappel prédéterminée, un attribut de rappel de l'article de rappel dans la plage de rappel afin qu'il ne soit plus rappelé.

8. Dispositif selon l'une des revendications 5 à 7, **caractérisé en ce qu'**une période pour le rappel est en outre réglée dans l'article de rappel et le module d'affichage (306) est en outre conçu pour :
si le moment courant se trouve dans la période pour le rappel, afficher le contenu de l'article de rappel.

9. Dispositif (500) pour afficher un contenu d'article, ce dispositif comprenant :
un processeur (518) ; et
une mémoire (504) pour le stockage d'instructions exécutables par le processeur (518) ;
le processeur (518) étant conçu pour :
lors de l'affichage d'une interface d'écran de verrouillage (26) d'un terminal, acquérir une position géographique courante du terminal ;
détecter si la position géographique courante se trouve dans une plage d'affichage d'un article de rappel ; et
si la position géographique courante se trouve dans la plage d'affichage de l'article de rappel, afficher le contenu de l'article de rappel sur l'interface d'écran de verrouillage (26) ;
et, lors du réglage de l'article de rappel, recevoir une distance entrée lors du réglage d'une plage de rappel afin d'acquérir la plage de rappel, un centre de la plage de rappel étant le même qu'un centre de la plage d'affichage, la plage de rappel étant plus grande que la plage d'affichage et une distance entre un point d'intersection d'un rayon émis à partir d'un point central de la plage d'affichage sur le périmètre de la plage de rappel et un point d'intersection du rayon sur le périmètre de la plage d'affichage est égale à la distance reçue ;
ajouter la plage de rappel à l'article de rappel ; et
si la position géographique courante ne se trouve pas dans la plage d'affichage de l'article de rappel, détecter si la position géographique courante se trouve dans la plage de rappel de l'article de rappel ; et
si la détection détermine que la position géographique courante se trouve dans la plage de rappel de l'article de rappel, rappeler l'article de rappel avec une manière de rappel prédéterminée comprenant :
l'acquisition d'une intensité lumineuse ambiante du terminal ;
lorsque l'intensité lumineuse ambiante est supérieure à un seuil de luminosité prédéterminé, activation d'un écran du terminal afin de faire apparaître une fenêtre intruse pour rappeler le contenu du rappel dans l'article de rappel sur l'écran ; et
lorsque l'intensité lumineuse ambiante est inférieure à un seuil de luminosité prédéterminé, rappel à l'utilisateur de l'article de rappel à l'aide d'une vibration ou d'une sonnerie.

10. Programme informatique qui, lorsqu'il s'exécute sur un processeur d'un terminal, exécute un procédé selon l'une des revendications 1 à 4.
